# EUROPÄISCHE PATENTSCHRIFT

(11) **EP 3 686 457 B1**
(45) Veröffentlichungstag und Bekanntmachung des Hinweises auf die Patenterteilung: **17.11.2021**
(21) Anmeldenummer: 19207628.9
(22) Anmeldetag: 07.11.2019
(51) Int. Cl.: F16G 13/16

(54) **KETTENGLIED FÜR EINE ENERGIEFÜHRUNGSKETTE**
CHAIN MEMBER FOR AN ENERGY SUPPLY CHAIN
MAILLON POUR CHAÎNE DE GUIDAGE D'ÉNERGIE

(30) Priorität: 25.01.2019 DE 102019101825
(43) Veröffentlichungstag der Anmeldung: 29.07.2020
(73) Patentinhaber: Murrplastik Systemtechnik GmbH, 71570 Oppenweiler (DE)
(72) Erfinder:
(74) Vertreter: Patentanwälte Bregenzer und Reule Partnerschaftsgesellschaft mbB

(56) Entgegenhaltungen:
- WO-A1-2004/092614
- DE-A1- 3 531 066
- DE-A1-102005 013 430
- DE-A1-102006 031 907
- DE-A1-102008 046 701
- DE-A1-102016 000 864
- KR-B1- 100 985 193

## Beschreibung

Die Erfindung betrifft ein Kettenglied für eine Energieführungskette gemäß Oberbegriff des Anspruchs 1 sowie eine aus einer Vielzahl solcher Kettenglieder aufgebaute Energieführungskette. Die DE 10 2006 031 907 A1 offenbart die Merkmale des Oberbegriffs des Anspruchs 1.

Energieführungsketten dienen der Führung von Versorgungsleitungen wie elektrischen Kabeln, Druckluftschläuchen oder Kühlwasserleitungen, von einem ortsfesten Anschluss zu einem beweglichen Verbraucher. Sie weisen eine Vielzahl von in einer Kettenlängsrichtung aneinandergereihten, gelenkig miteinander verbundenen und begrenzt gegeneinander verschwenkbaren Kettengliedern auf, welche einen sich in Kettenlängsrichtung erstreckenden Leitungsführungskanal begrenzen und, wie im vorliegenden Fall, abschnittsweise rings umschließen, in dem die Leitungen aufgenommen sind. Ein Kettenglied einer Energieführungskette ist aus der DE 195 41 928 C1 bekannt. Die dort beschriebenen Kettenglieder weisen jeweils zwei in Abstand zueinander angeordnete Seitenglieder und zwei in Abstand zueinander angeordnete Rahmenstege auf, wobei die Rahmenstege jeweils lösbar mit jedem der Seitenglieder verbunden sind. Zu diesem Zweck steht von jedem Seitenglied sowohl oben als auch unten ein Fortsatz in Richtung zum anderen Seitenglied vor, an dem einer der Rahmenstege in einem seiner beiden Endbereiche anliegt und mittels einer Rastverbindung lösbar mit dem Fortsatz verbunden ist. Wenn ein Kettenglied oder Teile des Kettenglieds aufgrund von Verschleiß ausgetauscht werden müssen, können die Rahmenstege durch Lösen der Rastverbindung von den Seitengliedern gelöst werden. Hierfür ist jedoch spezielles Werkzeug und/oder ein erhöhter Arbeitsaufwand erforderlich. Aus der DE 10 2005 013 430 A1 ist ein Kettenglied für eine Energieführungskette bekannt, dessen Rahmenstege an den Seitengliedern mittels Befestigungselementen befestigt sind, die durch Durchbrüche in den Seitengliedern durchgreifen und die Rahmenstege an den Seitengliedern fixieren. Die Verbindung zwischen Rahmensteg und Seitenglied wird durch Herausziehen des betreffenden Befestigungselements gelöst, was einfach mit Standardwerkzeug wie beispielsweise einem Schraubenzieher erfolgen kann. In manchen Anwendungsbereichen, in denen die Energieführungskette in einer Ablegewanne liegt, wird jedoch als nachteilig empfunden, dass die Befestigungselemente bei der Entriegelung über die Außenflächen der Seitenglieder vorstehen. Hierfür ist in einigen Anwendungsfällen zu wenig Platz in der Ablegewanne.

Es ist daher Aufgabe der Erfindung, ein Kettenglied der eingangs genannten Art derart weiterzubilden, dass es auf einfachere Weise montiert und demontiert werden kann.

Diese Aufgabe wird erfindungsgemäß durch ein Kettenglied mit den Merkmalen des Anspruches 1 gelöst. Vorteilhafte Weiterbildungen der Erfindung sind Gegenstand der abhängigen Ansprüche.

Der Erfindung liegt der Gedanke zugrunde, die Rahmenstege an den Fortsätzen der Seitenglieder mittels eines zusätzlichen Befestigungselements zu befestigen, das so ausgestaltet ist, dass es auf einfache Weise zwischen der Verriegelungsstellung und der Entriegelungsstellung verschoben werden kann. Die Befestigungselemente werden dabei von innen eingesetzt, so dass ein störendes Überstehen über die Außenflächen der Seitenglieder vermieden werden kann.

Die Fortsätze stehen vorzugsweise aus den den Leitungsführungskanal begrenzenden Innenflächen der Seitenglieder in Richtung zum jeweils anderen Seitenglied vor. Zweckmäßig sind die Auflageflächen der Fortsätze jedes der Seitenglieder einander abgewandt. Die Seitenglieder sind dann symmetrisch aufgebaut, und es muss nicht zwischen einem oberen und einem unteren Rahmensteg unterschieden werden. Des Weiteren wird bevorzugt, dass jedes der Befestigungselemente in der Freigabestellung an einem Anschlag am zugehörigen Seitenglied anliegt, der eine Bewegung in die Entriegelungsrichtung verhindert. Des Weiteren wird bevorzugt, dass jedes der Befestigungselemente in der Verriegelungsstellung an einem Anschlag am zugehörigen Rahmensteg anliegt, der eine Bewegung entgegen der Entriegelungsrichtung verhindert. Durch diese Maßnahmen wird ein Bereich vorgegeben, in dem sich die Befestigungselemente in ihrer Entriegelungsrichtung und entgegengesetzt zu dieser bewegen können, so dass sie diesbezüglich festgelegt sind.

Vorteilhaft steht jedes der Befestigungselemente in der Freigabestellung nicht über eine dem jeweils anderen Seitenglied abgewandte Außenfläche des zugehörigen Seitenglieds vor. Ein Lösen des Rahmenstegs vom Seitenglied ist somit auch dann möglich, wenn die Energieführungskette in einer Ablegewanne liegt und in dieser seitlich zu wenig Platz ist, um die Befestigungselemente aus den Außenflächen vorstehen zu lassen. Auch kann dann aufgrund dieser Maßnahme die Energieführungskette beim Zerlegen in der Ablegewanne verbleiben. Des Weiteren wird bevorzugt, dass jedes der Befestigungselemente eine in der Freigabestellung mit der Außenfläche des zugehörigen Seitenglieds fluchtende Betätigungsfläche aufweiset, auf die zum Bewegen des Betätigungselements entgegen der Entriegelungsrichtung Druck ausgeübt werden kann.

Zweckmäßig erstreckt sich jeder der Rahmenstege zwischen einander zugewandten, den Leitungsführungskanal begrenzenden Innenflächen der Seitenglieder und liegt vorzugsweise an diesen an. Das Vorsehen eines Absatzes im Seitenglied, auf dem der betreffende Rahmensteg zusätzlich zur Anlage an der Auflagefläche des zugehörigen Fortsatzes aufliegt, ist dabei nicht notwendig. Diese Maßnahme ist insbesondere dann von Vorteil, wenn zumindest ein Teil der Seitenglieder jeweils einen Gleitschuh aufweist, der an einer die Innenfläche mit einer dem jeweils anderen Seitenglied abgewandten Außenfläche verbindenden Stirnfläche des Seitenglieds befestigt ist und nicht über die Innenfläche vorsteht und dabei vorzugsweise mit einer seiner Seitenflächen mit der Innenfläche fluchtet. Ein solcher Gleitschuh ist dann beim Abnehmen des Rahmenstegs nicht im Weg, wenn dieser sich ebenfalls nur bis zur Innenfläche des Seitenglieds erstreckt.

Vorteilhaft werden die Befestigungselemente jeweils in der Verriegelungsstellung und/oder in der Freigabestellung mittels einer Rastverbindung gehalten, so dass sie sich nicht unbeabsichtigt aus der Verriegelungsstellung und/oder aus der Freigabestellung heraus bewegen können. Die Rastverbindungen bestehen zweckmäßig jeweils zwischen dem Befestigungselement und den zugehörigen Fortsatz. Zu diesem Zweck steht bevorzugt aus jedem Fortsatz und jedem Befestigungselement jeweils ein Rastelement vor, wobei das Rastelement des Befestigungselements bei dessen Bewegung zwischen der Verriegelungsstellung und der Freigabestellung unter elastischer Verformung des Befestigungselements von einer ersten Seite des Rastelements des Fortsatzes auf eine zweite Seite bewegt wird.

Um mit einem Werkzeug wie beispielsweise einem Schraubenzieher zum Entriegeln und Verriegeln der Verbindung zwischen den Rahmenstegen und den Seitengliedern in die Befestigungselemente eingreifen zu können, weist jedes der Befestigungselemente vorteilhaft eine Eingriffsöffnung in einer dem zugehörigen Fortsatz abgewandten Oberseite auf. Die Eingriffsöffnung kann eine Vertiefung im Befestigungselement sein. Vorteilhaft verläuft sie aber quer durch das Befestigungselement und kommuniziert mit einer Vertiefung im Fortsatz, so dass mit einem Schraubenzieher durch die Eingriffsöffnung durch und in die Vertiefung im Fortsatz eingegriffen werden kann, so dass eine Hebelwirkung erzielt werden kann. Zudem weist die Vertiefung an ihrem der Aufnahmeöffnung abgewandten Ende und/oder an ihrem der Aufnahmeöffnung zugewandten Ende eine Schräge auf. Die Schräge am der Aufnahmeöffnung abgewandten Ende verläuft dabei schräg in Richtung zum anderen Fortsatz des betreffenden Seitenglieds und zur Innenfläche, während die Schräge am der Aufnahmeöffnung zugewandten Ende in die andere Richtung geneigt ist, also zum anderen Fortsatz und von der Innenfläche weg verläuft. Ein durch die Eingriffsöffnung durchgreifender Schraubenzieher wird dann beim Eingreifen in die Vertiefung in eine schräge Position gebracht, so dass er bezüglich des Fortsatzes unter Mitnahme des Befestigungselementes verschwenkt werden kann.

Gemäß einer vorteilhaften Weiterbildung weist jede Anlagefläche zwei Flächenpartien auf, die im Abstand zueinander an einander gegenüberliegenden Seiten einer zum dem jeweiligen Seitenglied zugewandten Ende des Rahmenstegs offenen Ausnehmung angeordnet ist. Zwischen diesen Flächenpartien bleibt ein Zwischenraum frei, so dass eine Zentralpartie des Fortsatzes in diesem Bereich nicht vom Rahmensteg überdeckt wird. Dies ist insbesondere dann vorteilhaft, wenn die Befestigungselemente jeweils eine weitere Eingriffsöffnung an einer dem zugehörigen Fortsatz zugewandten Unterseite aufweisen, welche in der Verriegelungsstellung und/oder in der Freigabestellung mit der zugehörigen Ausnehmung im Rahmensteg kommuniziert. Im Bereich dieser Ausnehmung steht das jeweilige Befestigungselement zweckmäßig über den zugehörigen Fortsatz in Richtung zum anderen Seitenglied des Kettenglieds vor, und zwar sowohl in der Verriegelungsstellung als auch in der Freigabestellung, so dass dann, wenn die Energieführungskette in einer Ablegewanne liegt, mittels eines Schraubenziehers auch an den die jeweils unteren Rahmenstege fixierenden Befestigungselementen mittels Durchgreifen durch die Ausnehmung im Rahmensteg und Eingreifen in die weitere Eingriffsöffnung angegriffen werden kann.

Gemäß einer vorteilhaften Weiterbildung weisen die Rahmenstege an ihren den Seitengliedern zugewandten Stirnseiten jeweils mindestens eine in eine Vertiefung in der Innenfläche des betreffenden Seitenglieds eingreifende Erhebung auf und/oder die Rahmenstege weisen an ihren den Seitengliedern zugewandten Stirnseiten jeweils mindestens eine Vertiefung auf, in die eine Erhebung an der Innenfläche des betreffenden Seitenglieds eingreift. Durch diese Maßnahme erfolgt eine erste Fixierung des Rahmenstegs am Seitenglied, bevor das Befestigungselement in die Verriegelungsstellung bewegt wird. Dabei wird bevorzugt, dass die Erhebungen und Vertiefungen jeweils nicht höher bzw. tiefer sind als ein Millimeter.

Es wird des Weiteren bevorzugt, dass die einander zugewandten Innenflächen der Seitenglieder im Bereich über den Aufnahmeöffnungen einen größeren Abstand zueinander aufweisen als im Bereich unter den Aufnahmeöffnungen. Dies ermöglicht ein Einsetzen der Befestigungselemente in die Seitenglieder im Bereich der Aufnahmeöffnungen von schräg oben, indem beispielsweise ein nach unten abstehendes Schild mit der Betätigungsfläche in den durch diese Geometrie vorgegebenen Spalt eingeführt wird.

Eine erfindungsgemäße Energieführungskette ist aus einer Vielzahl von gelenkig miteinander verbundenen, begrenzt gegeneinander verschwenkbaren erfindungsgemäßen Kettengliedern zusammengesetzt, wobei die Verbindung jeweils zwischen den Seitengliedern der in Kettenlängsrichtung aufeinanderfolgenden Kettenglieder gegeben ist.

Im Folgenden wird die Erfindung anhand eines in der Zeichnung schematisch dargestellten Ausführungsbeispiels näher erläutert. Es zeigen:
- Fig. 1a, 1b: ein Kettenglied für eine Energieführungskette mit den Befestigungselementen in der Verriegelungsstellung und in der Freigabestellung;
- Fig. 2a, 2b: einen aus mehreren Kettengliedern zusammengesetzten Abschnitt einer Energieführungskette in einer Ablegewanne in perspektivischer Ansicht und in Frontansicht;
- Fig. 3a, 3b: einen ausschnittsweise dargestellten mittigen Querschnitt durch das Kettenglied gemäß Figur 1a, 1b und
- Fig. 4a, 4b: einen ausschnittsweise dargestellten außermittigen Querschnitt durch das Kettenglied gemäß Figur 1a, 1b ohne Gleitschuh.

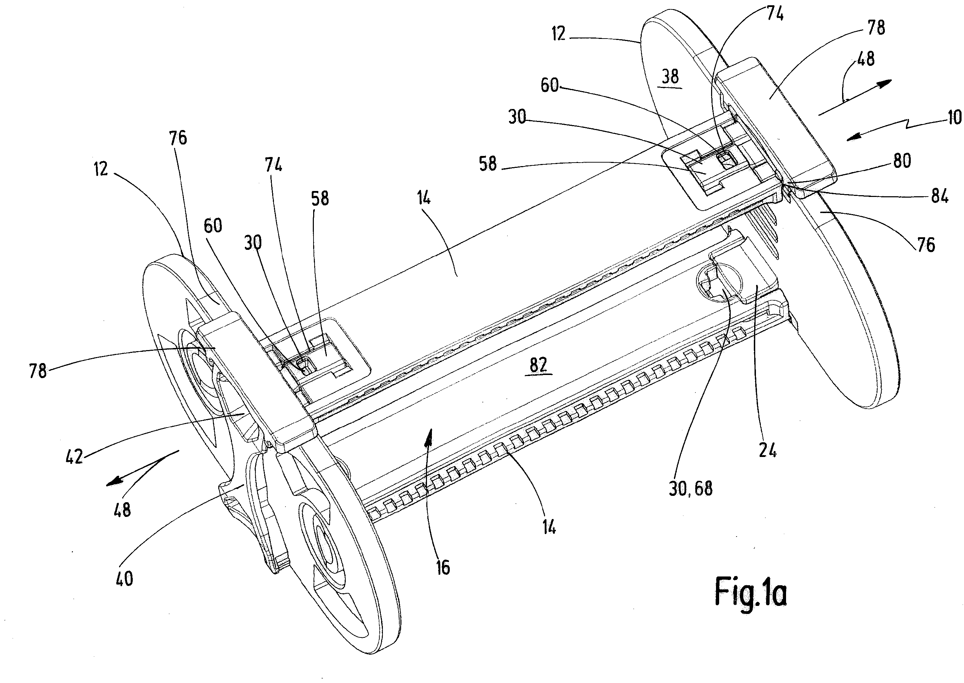

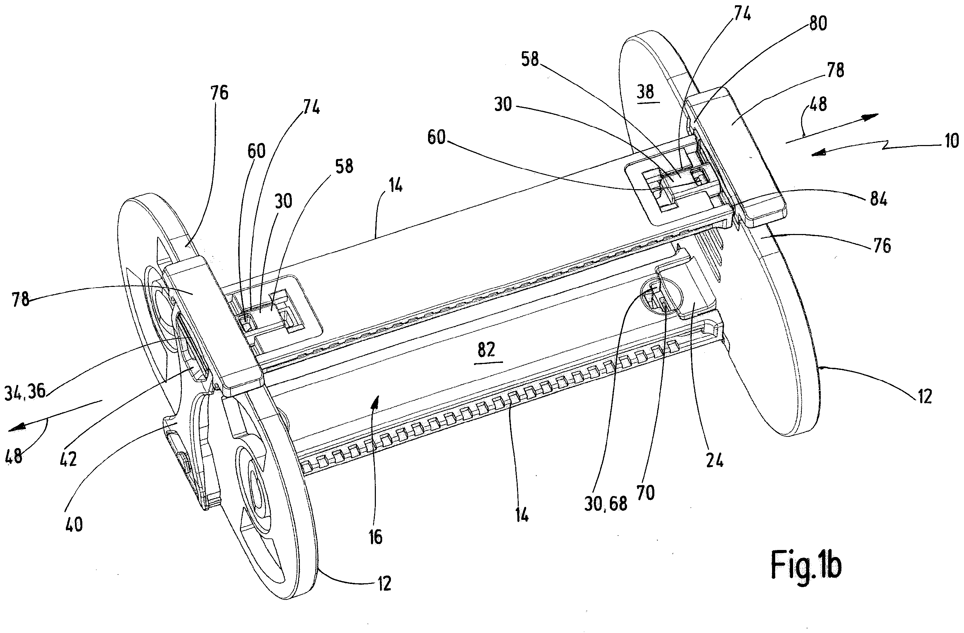

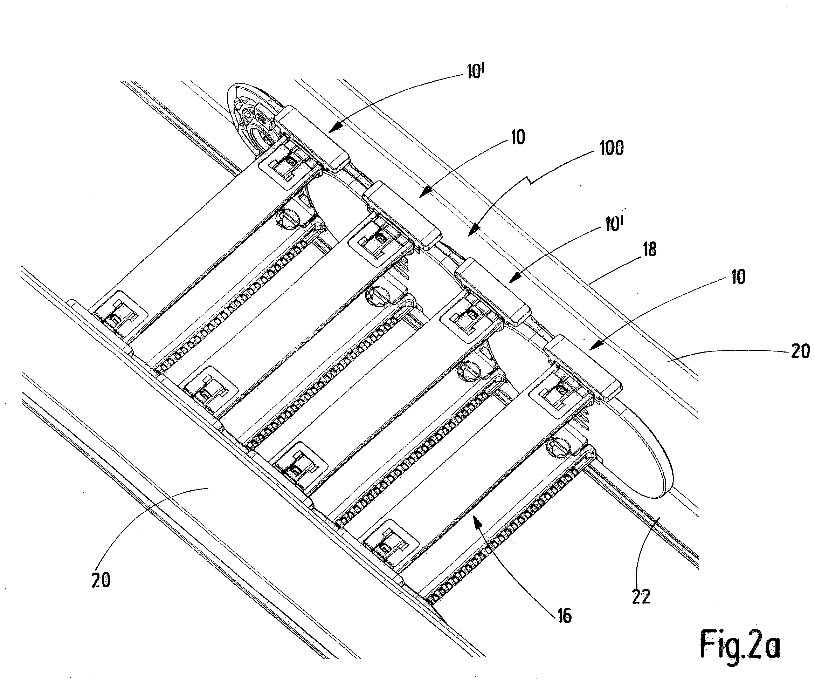

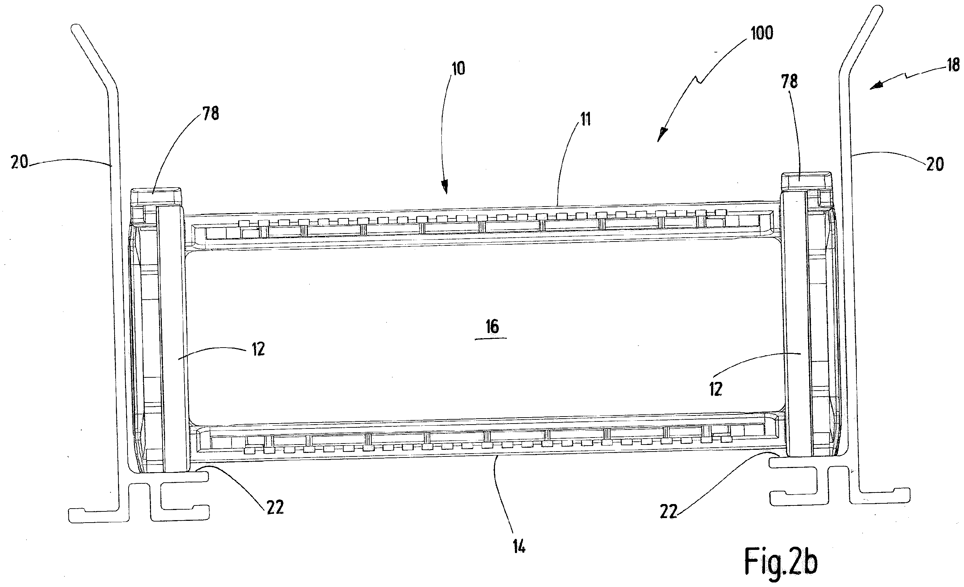

Das in Figur 1a, 1b gezeigte Kettenglied 10 weist zwei im Abstand zueinander angeordnete, die Seitenglieder 12 miteinander verbindende Rahmenstege 14 auf. Die Seitenglieder 12 und die Rahmenstege 14 schließen einen Abschnitt eines Leitungsführungskanals 16 ein, der für die Aufnahme von Versorgungsleitungen wie Kabeln, Schläuchen und dergleichen bestimmt ist. Zur Bildung einer Energieführungskette 100 werden mehrere Kettenglieder 10 wie in Figur 1a, 1b gezeigt sowie mehrere weitere Kettenglieder 10' in der Kettenlängsrichtung, in der sich der Leitungsführungskanal 16 erstreckt, gelenkig und begrenzt gegeneinander verschwenkbar aneinandergereiht. Dabei umgreifen die Seitenglieder 12' der weiteren Kettenglieder 10' die Seitenglieder 12 der Kettenglieder 10 im Bereich der gelenkigen Verbindungen wie in Figur 2a beispielhaft für einen Abschnitt einer Energieführungskette 100 gezeigt, der aus zwei Kettengliedern 10 und zwei weiteren Kettengliedern 10' zusammengesetzt ist, die in der Kettenlängsrichtung alternierend angeordnet sind. Die Energieführungskette 100 ist, wie in Figur 2a, 2b gezeigt, in einer Ablegewanne 18 abgelegt, welche zwei im Abstand zueinander angeordnete Seitenwangen 20 aufweist. Die Seitenwangen 20 weisen im unteren Bereich jeweils einen Absatz 22 auf, auf dem die Seitenglieder 12, 12' ruhen. Im Folgenden werden lediglich die Kettenglieder 10 näher beschrieben, wobei aber deren Beschreibung mit Ausnahme der Geometrie der Seitenglieder 12 als innere Seitenglieder ebenso auf die weiteren Kettenglieder 10' mit Ausnahme der Geometrie von deren Seitengliedern 12' als äußere, die inneren Seitenglieder 12 außen umgreifende Seitenglieder 12' anwendbar ist. In Bezug auf die im folgenden beschriebenen Merkmale unterscheiden sich die inneren Seitenglieder 12 von den äußeren Seitengliedern 12' lediglich darin, dass ihre Innenflächen 38 größer und die Außenflächen 40 kleiner sind als die der äußeren Seitenglieder 12'.

Jedes Seitenglied 12 weist zwei im Abstand zueinander angeordnete, in Richtung zum jeweils anderen Seitenglied 12 des Kettenglieds 10 vorstehende Fortsätze 24 auf, die jeweils eine vom Leitungsführungskanal 16 weg weisende Auflagefläche 26 aufweisen. An jeder Auflagefläche 26 liegt eine im jeweiligen dem zugehörigen Seitenglied 12 zugewandten Endbereich des betreffenden Rahmenstegs 14 angeordnete Anlagefläche 28 an. Die beiden Auflageflächen 26 eines Seitenglieds 12 sind einander abgewandt. Jedem der Fortsätze 24 ist ein Befestigungselement 30 zugeordnet, das zwischen einer Verriegelungsstellung (Figur 1a, 3a, 4a), in der es den zugehörigen Rahmensteg 14 am Fortsatz 24 fixiert, und einer Freigabestellung (Figur 1b, 3b, 4b) beweglich ist, in der es den Rahmensteg 14 am Fortsatz 24 freigibt. Zu diesem Zweck weist jeder Rahmensteg 14 in seinen den Seitengliedern 12 zugewandten Endbereichen jeweils eine Befestigungsfläche 32 auf, welche der jeweiligen Anlagefläche 28 abgewandt ist und vom zugehörigen Befestigungselement 30 in dessen Verriegelungsstellung übergriffen und in dessen Freigabestellung freigegeben wird.

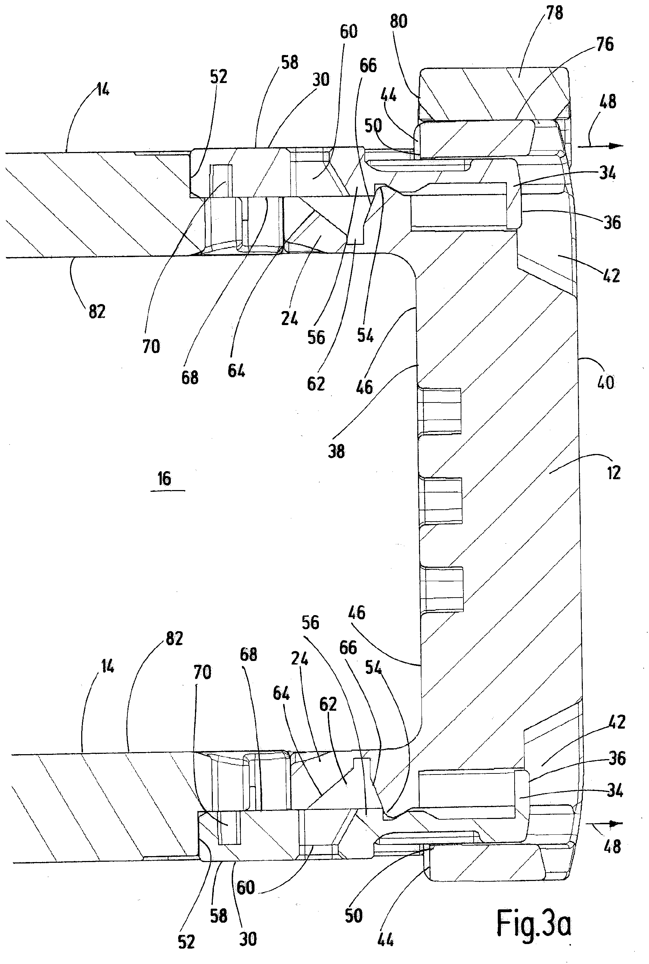

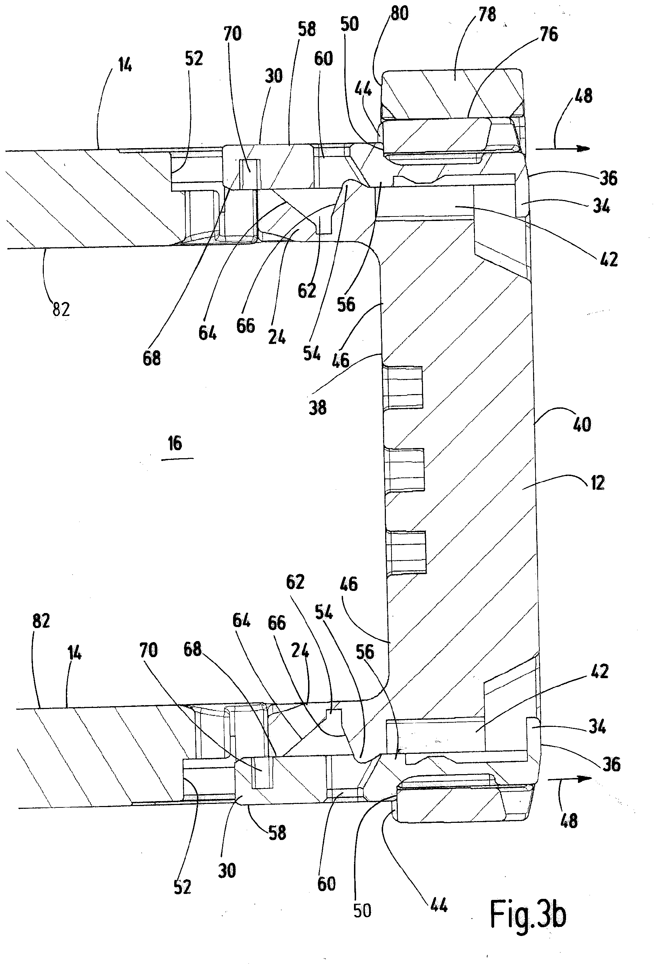

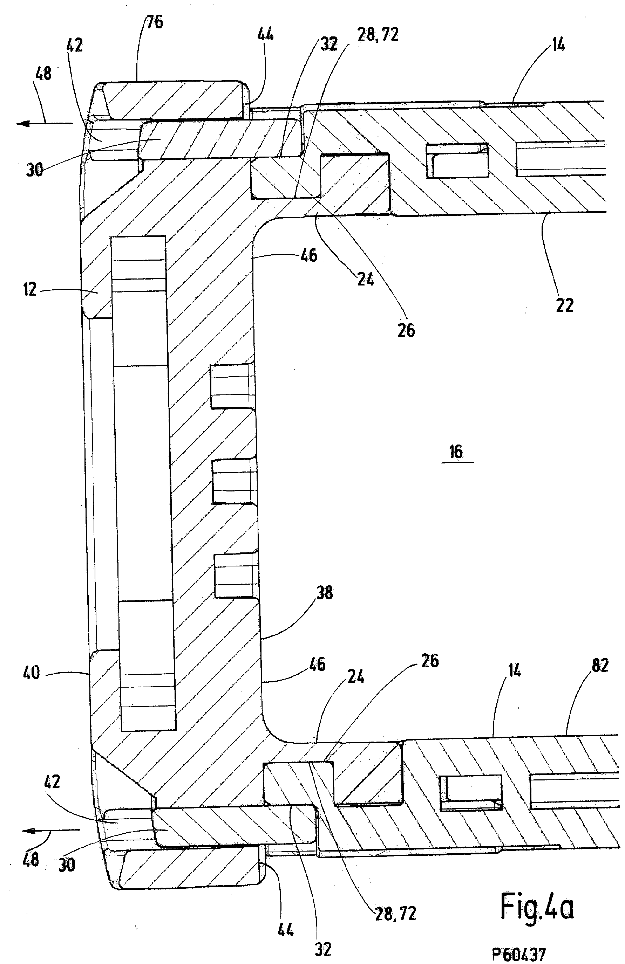

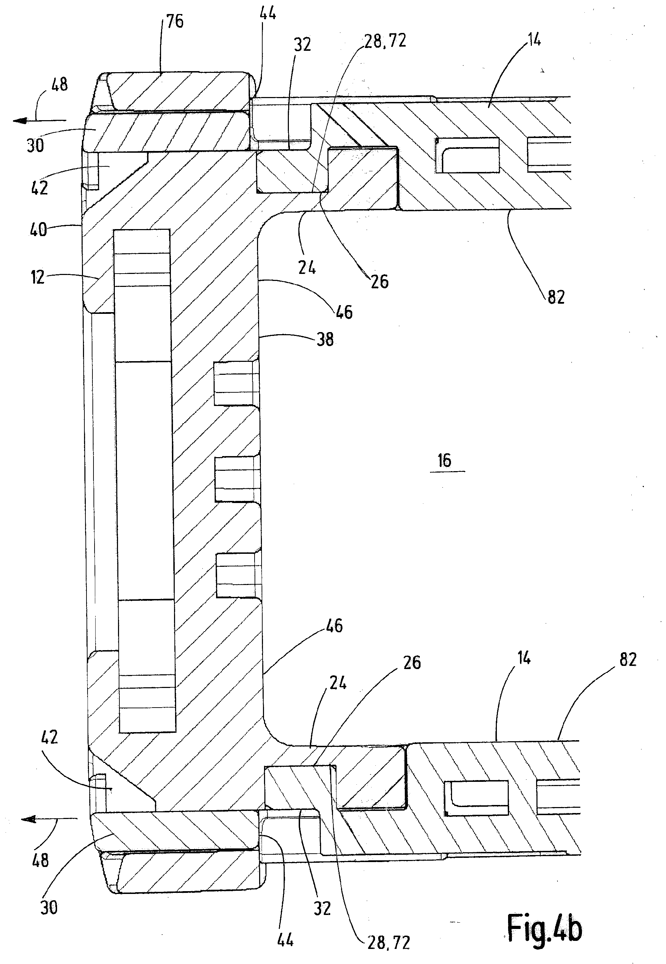

Das Befestigungselement 30 weist an einem nach unten abgekanteten Schild 34 eine Betätigungsfläche 36 auf, welche in der Verriegelungsstellung in einer das Seitenglied 12 von einer Innenfläche 38 bis zu einer Außenfläche 40 durchsetzenden Aufnahmeöffnung 42 und im Abstand zur Außenfläche 40 angeordnet ist, während sie in der Freigabestellung mit der Außenfläche 40 fluchtet. Die Innenfläche 38 des Seitenglieds 12 ist in einem oberen Bereich 44 über der Aufnahmeöffnung 42 weiter von der Innenfläche 38 des anderen Seitenglieds 12 entfernt als in einem unteren Bereich 46 unter der Aufnahmeöffnung 42, wo sie auch den Leitungsführungskanal 16 begrenzt, so dass beim Zusammenbau des Kettenglieds 10 das Befestigungselement 30 mit seinem Schild 34 innen von schräg oben oder, wenn der so gebildete Spalt groß genug ist, von oben in die Aufnahmeöffnung 42 eingesetzt werden kann. Die Bewegung des Befestigungselements 30 von der Verriegelungsstellung in die Freigabestellung erfolgt in einer Entriegelungsrichtung 48. Ein Weiterbewegen des Befestigungselements in die Entriegelungsrichtung 48 über die Freigabestellung hinaus wird durch einen Anschlag 50 am Seitenglied 12 verhindert, an dem das Befestigungselement 30 in der Freigabestellung anliegt (Figur 3b, 4b). Eine Bewegung entgegen der Entriegelungsrichtung 48 über die Verriegelungsstellung hinaus wird durch einen Anschlag 52 am Rahmensteg verhindert, an dem das Befestigungselement in der Verriegelungsstellung anliegt (Figur 3a, 4a).

Sowohl in der Verriegelungsstellung als auch in der Freigabestellung wird das Befestigungselement 30 mittels einer Rastverbindung gehalten, die durch ein erstes Rastelement 54 am Fortsatz 24 und ein zweites Rastelement 56 am Befestigungselement 30 gebildet wird. Das zweite Rastelement 56 wird, wenn das Befestigungselement 30 von der Verriegelungsstellung in die Freigabestellung oder zurückbewegt wird, über das erste Rastelement 54 hinweg geführt, so dass es in der Verriegelungsstellung auf der einen Seite des ersten Rastelements 54 und in der Freigabestellung auf der anderen Seite des ersten Rastelements 54 liegt. Wird das zweite Rastelement 56 über das erste Rastelement 54 geführt, so erfolgt dies unter elastischer Verformung des Befestigungselements 30. In der Verriegelungsstellung liegen die Rastelemente 54, 56 aneinander an, so dass das Befestigungselement 30 durch die Anlage am Anschlag 52 und am ersten Rastelement 54 in der Verriegelungsstellung gehalten wird, während auch in der Freigabestellung die Rastelemente 54, 56 aneinander anliegen, so dass das Befestigungselement durch Anlage am Anschlag 50 und am ersten Rastelement 54 in der Freigabestellung gehalten wird.

Zum Bewegen des Befestigungselements in und entgegen der Entriegelungsrichtung 48 weist dieses eine von einer der dem Fortsatz 24 abgewandten Oberseite 58 aus durchgehende Eingriffsöffnung 60 auf, die in der Verriegelungsstellung ebenso wie in der Freigabestellung mit einer Vertiefung 62 im Fortsatz 24 kommuniziert. Die Vertiefung 62 weist an ihrem der Innenfläche 38 abgewandten Ende eine erste Schräge 64 und an ihrem der Innenfläche 38 zugewandten Ende eine zweite Schräge 66 auf. Dabei verläuft die erste Schräge 64 schräg in Richtung auf den anderen Fortsatz 24 desselben Seitenglieds 12 und auf die Innenfläche 38 zu, während die zweite Schräge 66 schräg in Richtung auf den anderen Fortsatz 24 desselben Seitenglieds 12 zu und von der Innenfläche 38 weg verläuft. Durch die Eingriffsöffnung 60 kann mittels eines geeigneten Werkzeugs, beispielsweise mittels eines Schraubenziehers, durch- und in die Vertiefung 62 eingegriffen werden, so dass der Schraubenzieher aufgrund der Schrägen 64, 66 von vornherein schräg angeordnet ist und zum Bewegen des Befestigungselements 30 in und entgegen der Entriegelungsrichtung 48 als Hebel verwendet werden kann. Auf der dem Fortsatz 24 zugewandten Unterseite 68 des Befestigungselements 30 ist eine weitere Eingriffsöffnung 70 angeordnet, die sich aber nicht vollständig durch das Befestigungselement 30 erstreckt. Um in die weitere Eingriffsöffnung 70 über den Leitungsführungskanal 16 eingreifen zu können, sind die Anlageflächen 28 der Rahmenstege 14 zweigeteilt und weisen zwei Flächenpartien 72 auf, die einander gegenüberliegend an zwei Seiten einer zum jeweiligen Ende des Rahmenstegs 14 offenen Ausnehmung 74 angeordnet sind. Durch diese Ausnehmung 74 kann mittels eines Schraubenziehers durch- und in die weitere Eingriffsöffnung 70 eingegriffen werden, um das betreffende Befestigungselement 30 zu bewegen.

An den Seitengliedern 12, 12' ist auf einer die Innenfläche 38 mit der Außenfläche 40 verbindenden oberen Stirnfläche 76 jeweils ein Gleitschuh 78 befestigt, der nicht über die jeweilige Innenfläche 38 vorsteht, sondern eine mit der Innenfläche 38 fluchtende Seitenfläche 80 aufweist. Zudem sind die einander zugewandten Innenseiten 82 der Rahmenstege 14 poliert, so dass die Reibung zwischen den Rahmenstegen 14 und den im Leitungsführungskanal 16 aufgenommenen Leitungen minimiert wird. Zudem weisen die Rahmenstege 14 an ihren den Innenflächen 38 zugewandten Stirnseiten 84 jeweils in der Zeichnung nicht dargestellte Erhebungen von vorzugsweise maximal 1 mm Höhe, beispielsweise ca. 0,2 mm Höhe, auf, die in komplementäre Vertiefungen in den Innenflächen 38 eingreifen.

Zusammenfassend ist folgendes festzuhalten:
Die Erfindung betrifft ein Kettenglied 10, 10' für eine Energieführungskette 100 mit zwei im Abstand zueinander angeordneten Seitengliedern 12, 12' und mit zwei im Abstand zueinander angeordneten Rahmenstegen 14, wobei die Rahmenstege 14 jeweils lösbar mit jedem der Seitenglieder 12, 12' verbunden sind und mit diesen einen Abschnitt eines Leitungsführungskanals 16 zur Aufnahme von Versorgungsleitungen rings umschließen und wobei jedes der Seitenglieder 12, 12' zwei sich ein Stück weit auf das jeweils andere Seitenglied 12, 12' zu erstreckende, im Abstand zueinander angeordnete Fortsätze 24 mit jeweils einer Auflagefläche 26 aufweist, an der eine Anlagefläche 28 eines der Rahmenstege 14 anliegt. Erfindungsgemäß ist vorgesehen, dass jedem der Fortsätze 24 ein Befestigungselement 30 zugeordnet ist, das den zugehörigen Rahmensteg 14 an einer der Anlagefläche 28 abgewandten Befestigungsfläche 32 in einer Verriegelungsstellung übergreift und am jeweiligen Fortsatz 24 fixiert und das mittels Bewegung in eine Aufnahmeöffnung 42 im jeweiligen Seitenglied 12, 12' von der Verriegelungsstellung in einer Entriegelungsrichtung 48 in eine Freigabestellung beweglich ist, in der es den Rahmensteg 14 freigibt.

## Patentansprüche

1. Kettenglied für eine Energieführungskette (100) mit zwei im Abstand zueinander angeordneten Seitengliedern (12, 12') und mit zwei im Abstand zueinander angeordneten Rahmenstegen (14), wobei die Rahmenstege (14) jeweils lösbar mit jedem der Seitenglieder (12, 12') verbunden sind und mit diesen einen Abschnitt eines Leitungsführungskanals (16) zur Aufnahme von Versorgungsleitungen rings umschließen, wobei jedes der Seitenglieder (12, 12') zwei sich ein Stück weit auf das jeweils andere Seitenglied (12, 12') zu erstreckende, im Abstand zueinander angeordnete Fortsätze (24) mit jeweils einer Auflagefläche (26) aufweist, an der eine Anlagefläche (28) eines der Rahmenstege (14) anliegt, und wobei jedem der Fortsätze (24) ein Befestigungselement (30) zugeordnet ist, das den zugehörigen Rahmensteg (14) an einer der Anlagefläche (28) abgewandten Befestigungsfläche (32) in einer Verriegelungsstellung übergreift und am jeweiligen Fortsatz (24) fixiert, **dadurch gekennzeichnet, dass** jedes Befestigungselement (30) mittels Bewegung in eine Aufnahmeöffnung (42) im jeweiligen Seitenglied (12, 12') von der Verriegelungsstellung in einer Entriegelungsrichtung (48) in eine Freigabestellung beweglich ist, in der es den Rahmensteg (14) freigibt.

2. Kettenglied nach Anspruch 1, **dadurch gekennzeichnet, dass** die Auflageflächen (26) der Fortsätze (24) jedes der Seitenglieder (12, 12') einander abgewandt sind.

3. Kettenglied nach Anspruch 1 oder 2, **dadurch gekennzeichnet, dass** jedes der Befestigungselemente (30) in der Freigabestellung an einem Anschlag (50) am zugehörigen Seitenglied (12, 12') anliegt, der eine Bewegung in die Entriegelungsrichtung (48) verhindert.

4. Kettenglied nach einem der vorangehenden Ansprüche, **dadurch gekennzeichnet, dass** jedes der Befestigungselemente (30) in der Verriegelungsstellung an einem Anschlag (52) am zugehörigen Rahmensteg (14) anliegt, der eine Bewegung entgegen der Entriegelungsrichtung (48) verhindert.

5. Kettenglied nach einem der vorangehenden Ansprüche, **dadurch gekennzeichnet, dass** jedes der Befestigungselemente (30) in der Freigabestellung nicht über eine dem jeweils anderen Seitenglied (12, 12') abgewandte Außenfläche (40) des zugehörigen Seitenglieds (12, 12') vorsteht und vorzugsweise eine mit dieser fluchtende Betätigungsfläche (36) aufweist.

6. Kettenglied nach einem der vorangehenden Ansprüche, **dadurch gekennzeichnet, dass** sich jeder der Rahmenstege (14) zwischen einander zugewandten, den Leitungsführungskanal (16) begrenzenden Innenflächen (38) der Seitenglieder (12, 12') erstreckt und vorzugsweise an diesen anliegt und dass zumindest ein Teil der Seitenglieder (12, 12') jeweils einen Gleitschuh (78) aufweist, der an einer die Innenfläche (38) mit einer dem jeweils anderen Seitenglied (12, 12') abgewandten Außenfläche (40) verbindenden Stirnfläche (76) befestigt ist und nicht über die Innenfläche (38) vorsteht, wobei vorzugsweise eine seiner Seitenflächen (80) mit der Innenfläche (38) fluchtet.

7. Kettenglied nach einem der vorangehenden Ansprüche, **dadurch gekennzeichnet, dass** die Befestigungselemente (30) jeweils in der Verriegelungsstellung und/oder in der Freigabestellung mittels einer Rastverbindung (54, 56) gehalten werden.

8. Kettenglied nach Anspruch 7, **dadurch gekennzeichnet, dass** die Rastverbindungen (54, 56) jeweils zwischen dem Befestigungselement (30) und dem zugehörigen Fortsatz (24) bestehen und dass aus jedem Fortsatz (24) und jedem Befestigungselement (30) jeweils ein Rastelement (54, 56) vorsteht, wobei das Rastelement (56) des Befestigungselements (30) bei dessen Bewegung zwischen der Verriegelungsstellung und der Freigabestellung unter elastischer Verformung des Befestigungselements (30) von einer ersten Seite des Rastelements (54) des Fortsatzes (24) auf eine zweite Seite bewegt wird.

9. Kettenglied nach einem der vorangehenden Ansprüche, **dadurch gekennzeichnet, dass** jedes der Befestigungselemente (30) eine Eingriffsöffnung (60) in einer dem zugehörigen Fortsatz (24) abgewandten Oberseite (58) aufweist.

10. Kettenglied nach Anspruch 9, **dadurch gekennzeichnet, dass** die Eingriffsöffnung (60) quer durch das Befestigungselement (30) verläuft und mit einer Vertiefung (62) im Fortsatz (24) kommuniziert und dass die Vertiefung (62) an ihrem der Aufnahmeöffnung (42) abgewandten Ende eine schräg in Richtung zum anderen Fortsatz (24) des betreffenden Seitenglieds (12, 12') und zur Innenfläche (38) verlaufende Schräge (64) und/oder an ihrem der Aufnahmeöffnung (42) zugewandten Ende eine schräg in Richtung zum anderen Fortsatz (24) und von der Innenfläche (38) weg verlaufende Schräge (66) aufweist.

11. Kettenglied nach einem der vorangehenden Ansprüche, **dadurch gekennzeichnet, dass** jede Anlagefläche (28) zwei Flächenpartien (72) aufweist, die im Abstand zueinander an einander gegenüberliegenden Seiten einer zum dem jeweiligen Seitenglied (12, 12') zugewandten Ende des Rahmenstegs (14) offenen Ausnehmung (74) angeordnet ist.

12. Kettenglied nach Anspruch 11, **dadurch gekennzeichnet, dass** die Befestigungselemente (30) jeweils eine weitere Eingriffsöffnung (70) in einer dem zugehörigen Fortsatz (24) zugewandten Unterseite (68) aufweisen, welche in der Verriegelungsstellung und/oder in der Freigabestellung mit der zugehörigen Ausnehmung (74) im Rahmensteg (14) kommuniziert.

13. Kettenglied nach einem der vorangehenden Ansprüche, **dadurch gekennzeichnet, dass** die Rahmenstege (14) an ihren den Seitengliedern (12, 12') zugewandten Stirnseiten (84) jeweils mindestens eine in eine Vertiefung in der Innenfläche (38) des betreffenden Seitenglieds (12, 12') eingreifende Erhebung aufweisen und/oder dass die Rahmenstege (14) an ihren den Seitengliedern (12, 12') zugewandten Stirnseiten (84) jeweils mindestens eine Vertiefung aufweisen, in die eine Erhebung an der Innenfläche (38) des betreffenden Seitenglieds (12, 12') eingreift.

14. Kettenglied nach einem der vorangehenden Ansprüche, **dadurch gekennzeichnet, dass** die einander zugewandten Innenflächen (38) der Seitenglieder (12, 12') im Bereich (44) über den Aufnahmeöffnungen (42) einen größeren Abstand zueinander aufweisen als im Bereich (46) unter den Aufnahmeöffnungen (42).

15. Energieführungskette mit einer Vielzahl von gelenkig miteinander verbundenen, begrenzt gegeneinander verschwenkbaren Kettengliedern (10, 10') nach einem der vorangehenden Ansprüche.

## Claims

1. Chain link for an energy guide chain (100) having two side members (12, 12') arranged at a distance from one another and two frame webs (14) arranged at a distance from one another, wherein the frame webs (14) are each detachably connected to each of the side members (12, 12') and enclose therewith a portion of a line guide channel (16) for receiving supply lines, wherein each of the side members (12, 12') has two extensions (24) which extend a certain distance apart on the respective other side member (12, 12') and are arranged at a distance from one another and each have a bearing surface (26) on which a bearing surface (28) of one of the frame webs (24) bears, and wherein a fastening element (30) is assigned to each of the extensions (24) which engages over the associated frame web (14) on a fastening surface (32) facing away from the bearing surface (28) in a locking position and fixes it to the respective extension (24), **characterised in that** each fastening element (30) can be moved by means of movement into a receiving opening (42) in the respective side member (12, 12') from the locking position in an unlocking direction (48) into a release position in which it releases the frame web (14).

2. Chain link according to Claim 1, **characterised in that** the bearing surfaces (26) of the extensions (24) of each of the side members (12, 12') face away from one another.

3. Chain link according to Claim 1 or 2, **characterised in that**, in the release position, each of the fastening elements (30) bears against a stop (50) on the associated side member (12, 12') which prevents a movement in the unlocking direction (48).

4. Chain link according to any one of the preceding claims, **characterised in that**, in the locking position, each of the fastening elements (30) bears against a stop (52) on the associated frame web (14), which stop prevents a movement counter to the unlocking direction (48).

5. Chain link according to any one of the preceding claims, **characterised in that** each of the fastening elements (30) in the release position does not project beyond an outer surface (40) of the associated side member (12, 12') facing away from the respective other side member (12, 12') and preferably has an actuating surface (36) aligned with it.

6. Chain link according to any one of the preceding claims, **characterised in that** each of the frame webs (14) extends between inner surfaces (38) of the side members (12, 12') which face each other and delimits the line guide channel (16) and preferably bears against the latter, and **in that** at least some of the side members (12, 12') each have a sliding shoe (78) which is fastened to an end surface (76) connecting the inner surface (38) to an outer surface (40) facing away from the respective other side member (12, 12') and does not project beyond the inner surface (38), wherein preferably one of its side surfaces (80) is aligned with the inner surface (38).

7. Chain link according to any one of the preceding claims, **characterised in that** the fastening elements (30) are each held in the locking position and/or in the release position by means of a latching connection (54, 56).

8. Chain link according to Claim 7, **characterised in that** the latching connections (54, 56) each consist of the fastening element (30) and the associated extension (24), and in each case one latching element (54, 56) projects from each extension (24) and each fastening element (30), wherein the latching element (56) of the fastening element (30) is moved on its movement between the locking position and the release position with elastic deformation of the fastening element (30) from a first side of the latching element (54) of the extension (24) to a second side.

9. Chain link according to any one of the preceding claims, **characterised in that** each of the fastening elements (30) has an engagement opening (60) in an upper side (58) facing away from the associated extension (24).

10. Chain link according to Claim 9, **characterised in that** the engagement opening (60) runs transversely through the fastening element (30) and communicates with a depression (62) in the extension (24) and **in that** the depression (62) has, at its end facing away from the receiving opening (42), a bevel (64) running obliquely in the direction of the other extension (24) of the relevant side member (12, 12') and to the inner surface (38) and/or at its end facing the receiving opening (42) a bevel (66) running obliquely in the direction of the other extension (24) and away from the inner surface (38).

11. Chain link according to any one of the preceding claims, **characterised in that** each bearing surface (28) has two surface parts (72) which are arranged at a distance from one another on opposite sides of a recess (74) which is open to the end of the frame web (14) facing the respective side member (12, 12').

12. Chain link according to Claim 11, **characterised in that** the fastening elements (30) each have a further engagement opening (70) in an underside (68) which faces the associated extension (24), and which communicates with the associated recess (74) in the frame web (14) in the locking position and/or in the release position.

13. Chain link according to any one of the preceding claims, **characterised in that** the frame webs (14) have, at their end faces (84) facing the side members (12, 12'), in each case at least one elevation which engages in a depression in the inner surface (38) of the relevant side member (12, 12'), and/or **in that** the frame webs (14) have in each case at least one depression at their end faces (84) facing the side members (12, 12'), into which an elevation engages on the inner surface (38) of the respective side member (12, 12').

14. Chain link according to any one of the preceding claims, **characterised in that** the mutually facing inner surfaces (38) of the side members (12, 12') have a greater distance from one another in the region (44) above the receiving openings (42) than in the region (46) below the receiving openings (42).

15. Energy guide chain with a plurality of chain links (10, 10') which are connected to one another in an articulated manner and can be pivoted to a limited extent relative to one another according to any one of the preceding claims.

## Revendications

1. Maillon destiné à une chaîne (100) de guidage d'énergie, comprenant deux organes latéraux (12, 12') disposés avec espacement mutuel et deux membrures d'encadrement (14) agencées à distance l'une de l'autre, lesdites membrures d'encadrement (14) étant respectivement reliées de manière libérable à chacun desdits organes latéraux (12, 12'), en association avec lesquels elles ceinturent un tronçon d'un canal (16) de guidage de conducteurs ou de conduits, conçu pour recevoir des conducteurs ou des conduits d'alimentation, chacun desdits organes latéraux (12, 12') étant muni de deux appendices (24) espacés l'un de l'autre, s'étendant d'une certaine distance en direction de l'autre organe latéral (12, 12') considéré et dotés, à chaque fois, d'une surface d'appui (26) contre laquelle une surface de contact (28) de l'une desdites membrures d'encadrement (14) est en applique, sachant qu'un élément de fixation (30), affecté à chacun desdits appendices (24), vient coiffer la membrure d'encadrement (14) associée, dans une position de verrouillage, au niveau d'une surface de fixation (32) pointant à l'opposé de ladite surface de contact (28), et consigne ladite membrure à demeure sur l'appendice (24) considéré, **caractérisé par le fait que** chaque élément de fixation (30) peut être mû dans une direction de déverrouillage (48) à partir de la position de verrouillage, par mouvement s'opérant dans un orifice de réception (42) pratiqué dans l'organe latéral (12, 12') considéré, pour parvenir à une position de libération dans laquelle il libère la membrure d'encadrement (14).

2. Maillon selon la revendication 1, **caractérisé par le fait que** les surfaces d'appui (26) des appendices (24) de chacun des organes latéraux (12, 12') sont tournées à l'opposé les unes des autres.

3. Maillon selon la revendication 1 ou 2, **caractérisé par le fait que** chacun des éléments de fixation (30) est en applique, dans la position de libération, contre une butée (50) qui est située sur l'organe latéral (12, 12') associé et empêche un mouvement dans la direction de déverrouillage (48).

4. Maillon selon l'une des revendications précédentes, **caractérisé par le fait que** chacun des éléments de fixation (30) est en applique, dans la position de verrouillage, contre une butée (52) qui est située sur la membrure d'encadrement (14) associée et empêche un mouvement en sens inverse de la direction de déverrouillage (48).

5. Maillon selon l'une des revendications précédentes, **caractérisé par le fait que** chacun des éléments de fixation (30) ne fait pas saillie, dans la position de libération, au-delà d'une surface extérieure (40) de l'organe latéral (12, 12') associé qui est orientée à l'opposé de l'autre organe latéral (12, 12') considéré, et est de préférence pourvu d'une surface d'actionnement (36) située dans l'alignement de ladite surface.

6. Maillon selon l'une des revendications précédentes, **caractérisé par le fait que** chacune des membrures d'encadrement (14) s'étend entre des surfaces intérieures (38) des organes latéraux (12, 12') qui sont tournées les unes vers les autres et délimitent le canal (16) de guidage de conducteurs ou de conduits, et est de préférence en applique contre lesdites surfaces ; et **par le fait qu'**au moins une partie desdits organes latéraux (12, 12') est dotée, à chaque fois, d'un patin de glissement (78) qui est fixé à une face d'extrémité (76) reliant la surface intérieure (38) à une surface extérieure (40) pointant à l'opposé de l'autre organe latéral (12, 12') considéré, et qui ne fait pas saillie au-delà de ladite surface intérieure (38), l'une de ses surfaces latérales (80) étant préférentiellement située dans l'alignement de ladite surface intérieure (38).

7. Maillon selon l'une des revendications précédentes, **caractérisé par le fait que** les éléments de fixation (30) sont respectivement retenus, dans la position de verrouillage et/ou dans la position de libération, au moyen d'une liaison (54, 56) par encliquetage.

8. Maillon selon la revendication 7, **caractérisé par le fait que** les liaisons (54, 56) par encliquetage sont instaurées, à chaque fois, entre l'élément de fixation (30) et l'appendice (24) associé ; et **par le fait qu'**un élément encliquetable (54, 56) fait respectivement saillie au-delà de chaque appendice (24) et de chaque élément de fixation (30), sachant que l'élément encliquetable (56) dudit élément de fixation (30) est mû au cours du mouvement de ce dernier entre la position de verrouillage et la position de libération, avec déformation élastique dudit élément de fixation (30), vers un second côté à partir d'un premier côté de l'élément encliquetable (54) dudit appendice (24).

9. Maillon selon l'une des revendications précédentes, **caractérisé par le fait que** chacun des éléments de fixation (30) est muni d'un orifice (60) de venue en prise, pratiqué dans une face supérieure (58) pointant à l'opposé de l'appendice (24) associé.

10. Maillon selon la revendication 9, **caractérisé par le fait que** l'orifice (60) de venue en prise traverse l'élément de fixation (30) dans le sens transversal, et communique avec un renfoncement (62) ménagé dans l'appendice (24) ; et **par le fait que** ledit renfoncement (62) comporte, à son extrémité pointant à l'opposé de l'orifice de réception (42), un biseau (64) s'étendant à l'oblique en direction de l'autre appendice (24) de l'organe latéral (12, 12') considéré, et en direction de la surface intérieure (38), et/ou comporte, à son extrémité tournée vers ledit orifice de réception (42), un biseau (66) qui s'étend à l'oblique en direction dudit autre appendice (24) et s'éloigne de ladite surface intérieure (38).

11. Maillon selon l'une des revendications précédentes, **caractérisé par le fait que** la surface de contact (28) comprend deux régions (72) disposées, avec espacement l'une de l'autre, sur des côtés mutuellement opposés d'un évidement (74) ouvert en direction de l'extrémité de la membrure d'encadrement (14) qui est tournée vers l'organe latéral (12, 12') considéré.

12. Maillon selon la revendication 11, **caractérisé par le fait que** les éléments de fixation (30) sont pourvus à chaque fois, dans une face inférieure (68) tournée vers l'appendice (24) associé, d'un orifice supplémentaire (70) de venue en prise qui communique, dans la position de verrouillage et/ou dans la position de libération, avec l'évidement associé (74) ménagé dans la membrure d'encadrement (14).

13. Maillon selon l'une des revendications précédentes, **caractérisé par le fait que** les membrures d'encadrement (14) sont respectivement pourvues, au niveau de leurs faces d'extrémité (84) tournées vers les organes latéraux (12, 12'), d'au moins un bossage pénétrant dans un renfoncement ménagé dans la surface intérieure (38) de l'organe latéral (12, 12') considéré ; et/ou **par le fait que** lesdites membrures d'encadrement (14) sont respectivement dotées, au niveau de leurs faces d'extrémité (84) tournées vers lesdits organes latéraux (12, 12'), d'au moins un renfoncement dans lequel pénètre un bossage ménagé sur la surface intérieure (38) dudit organe latéral (12, 12') considéré.

14. Maillon selon l'une des revendications précédentes, **caractérisé par le fait que** les surfaces intérieures (38) tournées les unes vers les autres sur les organes latéraux (12, 12') présentent, dans la région (44) située au-dessus des orifices de réception (42), un plus grand espacement mutuel que dans la région (46) située au-dessous desdits orifices de réception (42).

15. Chaîne de guidage d'énergie munie d'une pluralité de maillons (10, 10') conformes à l'une des revendications précédentes, reliés les uns aux autres de manière articulée et aptes à accomplir des pivotements limités les uns par rapport aux autres.
